# EUROPEAN PATENT APPLICATION

(11) **EP 2 056 542 A1**
(43) Date of publication of application: **06.05.2009**
(21) Application number: 07021132.1
(22) Date of filing: 29.10.2007
(51) Int. Cl.: H04L 12/56, H04B 7/005

(54) **Transmission power mask for fast access requests**

(71) Applicant: Panasonic Corporation, Kadoma-shi Osaka 571-8501 (JP)
(72) Inventor: Cooper, David Edward, Dr., Colthrop Thatcham Berkshire RG19 4ZB (GB)
(74) Representative: Grünecker, Kinkeldey, Stockmair & Schwanhäusser Anwaltssozietät

(57) **Abstract**

The invention relates to a transmission power mask to be applied to the transmission of fast access message in the uplink of a mobile communication system. Furthermore, the invention relates to a method and mobile station for sending a fast access message and a base station for configuring the transmission power mask to be applied to the transmission of the fast access message in the uplink of a mobile communication system. To reduce the interference of a fast access message with parallel transmissions by other mobile stations in the same time slot, the invention proposes a new transmission power mask that is to be applied to the transmission of the fast access message and that is indicating a zero transmission power for the portion or portions of the time slot in which another mobile station may transmit encrypted bits for user data

## Description

### FIELD OF THE INVENTION

The invention relates to a transmission power mask to be applied to the transmission of fast access message in the uplink of a mobile communication system. Furthermore, the invention relates to a method and mobile station for sending a fast access message and a base station for configuring the transmission power mask to be applied to the transmission of fast access message in the uplink of a mobile communication system.

### TECHNICAL BACKGROUND

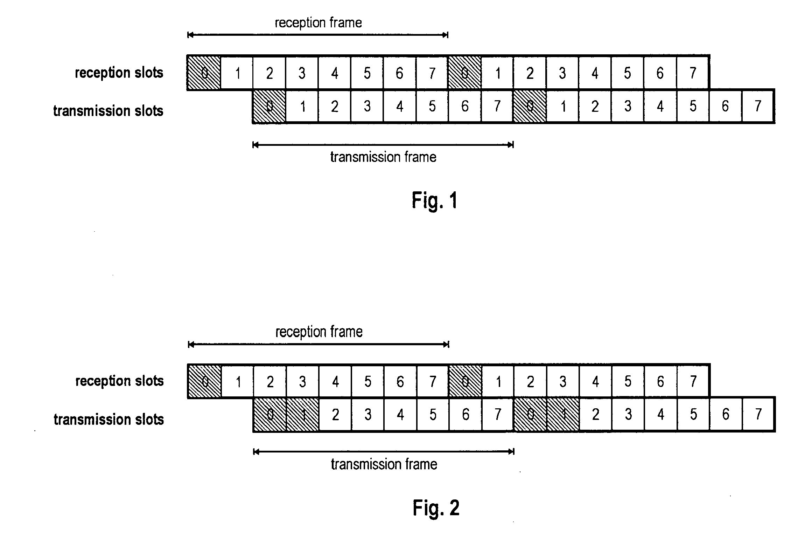

The GSM (originally from Groupe Spécial Mobile) radio system (and its extension to GPRS) employs "time division duplexing" to ensure that the radio transceiver in the mobile station is not required to transmit and receive simultaneously. This simplifies the design of the radio. This "time division duplexing" is achieved by dividing available time into "time-slots", some of which are assigned for the purpose of radio transmission and some for reception. As illustrated in Fig. 1, there are 8 timeslots in each TDMA frame of a GSM system. The slot used for transmission is separated from the slot used for reception by a time interval of two slots. Fig. 1 also illustrates the convention for slot numbering; the numbering of reception (Rx) slots and transmission (Tx) slots ensures that the same "slot number" is used in both downlink and uplink (in the example below, slot 0).

The GPRS system is an extension of the basic GSM system which is used for so-called "packet switched" communications. It allows an increased data rate during packet data transfer by using more than one timeslot either for transmission or reception. Fig. 2 illustrates an exemplary TDMA frame structure of a GPRS system where, in this particular example, two slots are used for transmission and one for reception. GPRS allows the number of uplink slots and downlink timeslots to vary according to constraints determined by the mobile and the availability of free timeslots. In GPRS, data is transmitted in both directions between the base station and a mobile on Packet Data Channels (PDCHs). Each PDCH uses a single slot, i.e. a slot with the same index, in successive TDMA frames, and a mobile station can use one or more PDCHs. In the example shown in Fig. 2, two PDCHs would be required.

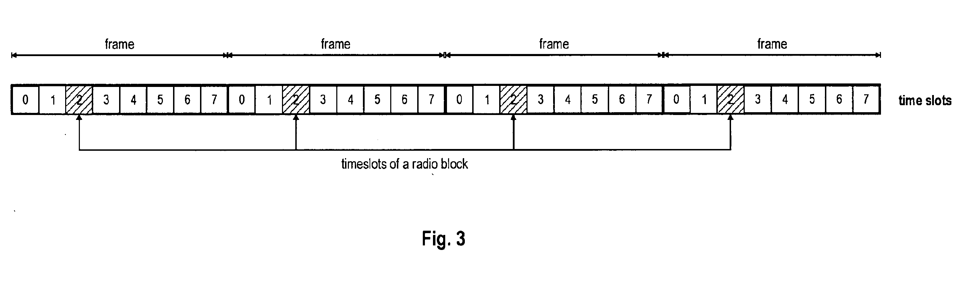

GPRS transmits data in units called a 'radio block', where one radio block is contained in four successive timeslots of a physical channel, i.e. in the same timeslot in 4 successive TDMA frames. This concept of a GPRS radio block is shown in Fig. 3, where the physical channel is exemplarily illustrated on the timeslot with index 2 (timeslot 2). This structure is common to radio blocks in the downlink and uplink.

EDGE (Enhanced Data rates for GSM Evolution) or EGPRS (Enhanced GPRS) may be considered a further improvement to GPRS. EGPRS functions on any network with GPRS deployed on it, provided the carrier implements the necessary upgrade. In addition to Gaussian minimum-shift keying (GMSK) utilized in GSM and GPRS, EGPRS introduces new modulation schemes such as 8 phase shift keying (8PSK) for the upper five of its nine modulation and coding schemes, which effectively triples the gross data rate offered by GSM. EGPRS and GPRS utilize a rate adaptation algorithm that adapts the modulation and coding scheme (MCS) according to the quality of the radio channel and thereby the bit rate and robustness of data transmission.

Due to the bursty and discontinuous nature of data transmission, especially for packet-based voice services, it is highly desirable to allow different mobiles to multiplex the use of a given timeslot between different mobiles. (E)GPRS supports this both for uplink or downlink communications, using a method referred to as 'dynamic allocation'.

When a (E)GPRS connection is created, the base station 'assigns' one or more PDCHs to each mobile station, indicating which slots the PDCHs are on. Since resources can be shared between different mobiles, the action of 'assigning' a PDCH does not indicate that the mobile is allowed to use the PDCH.

To allow sharing on the downlink, all data sent on a given timeslot is tagged with an address (called TFI, "temporary flow identity") which indicates to which mobile the data is destined. All mobiles which have been assigned a PDCH on that timeslot decode the address in the data and only the addressed mobile uses the data.

To allow sharing of the uplink, the base station transmits a "USF" (Uplink State Flags) on the downlink to indicate which uplink timeslots a given mobile is allowed to transmit on during the next radio block - the PDCH is said to be 'allocated' to that particular mobile for the duration of the next radio block. A USF is transmitted along with other data during each radio block. All interested mobiles (i.e. those that have been 'assigned' a PDCH on that timeslot) decode this quantity and at most a single indicated mobile is allowed to transmit a given timeslot (see 3GPP TS 45.002, "Technical Specification Group GSM/EDGE; Radio Access Network; Multiplexing and multiple access on the radio path (Release 7)", version 7.5.0, available at http://www.3gpp.org and incorporated herein by reference).

The USF can take 8 values, of which one value is reserved, so in principle the channel can be shared by 7 mobiles. The USF is transmitted by the BTS on a given radio block to indicate which mobile is allowed to transmit on the uplink in certain indicated channels during the subsequent radio block. Only the indicated mobile may transmit in the given channels during the subsequent frame.

This method for uplink multiplexing can lead to significant delays before a mobile station providing a speech or voice service can access the uplink during a 'speech silence' period. Even if the speech mobile has nothing to send, the base transceiver station (BTS) polls it regularly by sending a USF which indicates the speech mobile, since the end of the silent period cannot be predicted. The result of such a poll is that no other mobiles can use the channel during the next radio block, even if the speech mobile has nothing to send.

Of course the BTS (also referred to as base station) could poll the speech mobile infrequently, but in that case when speech resumes there would be a severe delay. For example, suppose the BTS polls the speech mobile one half of the time (thus wasting 50% of uplink resources during a silent period). In the worst case, assuming speech began just too late for an allocated uplink radio block, there could be a delay of two radio blocks before the speech mobile station MS can transmit again to indicate that it has some data to send. This corresponds to approximately 40 ms, an undesirable period of delay. Even then there will be a further delay of at least one radio block, since the base station controller (BSC) must decode this message and react to it, so in practice delays of up to 60 ms are expected.

Various methods have been proposed for allowing the speech mobile to pre-emptively request resources without waiting to be polled. One of the most promising methods is described in EP 1435746 A1 (incorporated herein by reference), in which the mobile station is allowed to transmit a "Fast Access Request" (or fast access message) even in a timeslot where another mobile is using the uplink. This consists of a fixed data sequence which is designed to have minimum correlation (hence minimal interference) with the data sequence transmitted by the other mobile. However the proposed solution will still generate interference with uplink data transmitted by other mobile.

### SUMMARY OF THE INVENTION

In view of the problems above, it is an object of the invention to suggest a solution for allowing mobile stations to pre-emptively request an uplink resource with minimum interference with transmission of other mobiles.

The object is solved by the subject matter of the independent claims. Advantageous embodiments of the invention are subject matters of the dependent claims.

One main aspect of the invention is the definition of a new transmission power mask that is applied to uplink transmissions from a mobile station. In particular, the mobile stations may utilize this transmission power mask for transmitting a fast access message; that is an uplink message utilized by a mobile station to request the allocation of an assigned uplink resource (for example one or more timeslots in a Time Division Multiple Access (TDMA) based system) that is presently allocated to another mobile station. For example, for TDMA based systems like GSM, the transmission power mask defines at least two different transmission power levels that are to be applied to the uplink transmission during a time slot.

The transmission power mask is designed to avoid interference with parallel transmissions of other mobile terminals in the same time slot. According to one embodiment of the invention, the transmission power mask indicates a zero transmission power level for the portion or portions of the time slot in which another mobile station may transmit encrypted bits of user data.

Furthermore, in another, mores specific example, the transmission power mask indicates a non-zero transmission power for a portion of the duration of the time slot that is coinciding with at least a part of a training sequence of a burst of data transmitted by another mobile station within the same time slot, and a zero transmission power for the remaining portion of the time slot.

In some embodiments, the transmission power mask is designed specifically for use in a GSM based communication system. Accordingly, the transmission power mask may indicate a non-zero transmission power within the time slot for a time duration equal or smaller than the time duration of 26 bits or modulation symbols of a normal burst of a GSM based mobile communication system. Alternatively, in another example, the transmission power mask indicates a non-zero transmission power within the time slot for a time duration equal or smaller than the 31 symbols of the training sequence of a high symbol rate burst of a GSM based mobile communication system. Hence, the duration of a time slot for which the mobile station utilizes a non-zero transmission power is depending on the actual position and duration (in bits or modulation symbols) of the training sequence in a burst potentially transmitted by another mobile station in parallel to the fast access message.

Another embodiment of the invention relates to a method for reducing interference caused by a fast access message within a mobile communication system utilizing TDMA for dividing physical resources at a given transmission frequency into individual time slots. Typically, a given number of time slots forms a so-called frame, and one or more time slots of a frame is/are assigned for potential use to mobile stations (for example a first and a second mobile station) to transmit via a traffic channel. The base transceiver station (base station) of the communication system may temporarily allocate the time slot or the time slots on the uplink for use by the second mobile station. To request the (re)allocation of the time slot to the first mobile station, same transmits a fast access message within the time slot temporarily allocated for use by the second mobile station. Thereby, the first mobile station applies the before-mentioned transmission power mask to the transmission of the fast access message thereby utilizing zero transmission power for the transmission of those portion or portions of the fast access message potentially coinciding with a transmission of encrypted bits of user data by the second mobile station within the time slot.

The second mobile station may transmit a burst of data within the time slot temporarily allocated to the second mobile station, wherein the burst of data comprises a training sequence and the encrypted bits of user data.

In a further embodiment of the invention, the first mobile station utilizes a non-zero transmission power for at least a portion of the transmission of the fast access message that is coinciding with the transmission of the training sequence within the burst of data by the second mobile station in said time slot.

According to another embodiment of the invention the transmission power mask is indicating a non-zero transmission power for a portion of the duration of the time slot that is not coinciding with at least a part of the training sequence within the burst of data transmitted by the second mobile station, and is indicating zero transmission power for the remaining portion of the time slot.

In a further embodiment of the invention the time slot temporarily allocated to the second mobile station is (re)allocated to the first mobile station by a base station. This (re)allocation is made in response to receiving the fast access message at the base station.

The burst of data transmitted by the second mobile terminal within the time slot may for example be a normal burst or a high symbol rate burst of a GSM system. The normal burst or high symbol rate burst comprise tail bits, encrypted bits for user data, the training sequence and a guard period. Accordingly, the transmission power mask may for example indicate zero transmission power for the portion or portions of the time slot in which another mobile station may transmit encrypted bits for user data.

According to another embodiment of the invention, data is transmitted in form of so-called radio blocks that consist of a given number of time slots in successive frames. Hence, the fast access message may be comprised in a radio block being transmitted utilizing this given number of time slots in successive frames. Accordingly, the first mobile terminal applies the transmission power mask to each time slot carrying the radio block comprising the fast access message.

Furthermore, in another embodiment, a plurality of predefined data sequences is defined and the fast access message consists of different ones of the predefined data sequences. In each time slot of said given number of time slots, the first mobile station transmits one of said predefined data sequences forming the fast access message, for example, in a cyclic manner. Advantageously, the predefined data sequences have a minimal correlation with a normal burst or a high data rate burst of a GSM based communication system.

According to a further embodiment, the first mobile station and/or the second mobile station receive from a base station an indication of the duration of the time period within the time slot in which the transmission power for transmitting the fast access message is non-zero.

The invention according to another embodiment also provides a mobile station for use within a mobile communication system. The mobile station comprises a transmitter for transmitting a fast access message in the time slot temporarily allocated to another mobile station so as to request (re)allocation of the time slot to the mobile station. Moreover, the mobile station applies a transmission power mask to the transmission of the fast access message thereby utilizing zero transmission power for the transmission of those portion or portions of the fast access message potentially coinciding with a transmission of encrypted bits of user data by the second mobile station within the time slot.

The mobile station may also comprise a receiver for receiving from a base station an indication of a duration of the time period within the time slot in which the transmission power for transmitting the fast access message is non-zero.

The mobile station according to another embodiment further comprises a processor for estimating multi-path fading experienced by downlink transmissions on the traffic channel and for determining a duration of the time period within the time slot in which the transmission power for transmitting the fast access message is non-zero based on the estimation of the multi-path fading on the traffic channel.

As mentioned before, the fast access message may be for example comprised in a radio block being transmitted utilizing a given number of time slots in successive frames. In this case, the mobile terminal may apply the transmission power mask to each time slot carrying the radio block comprising the fast access message.

Moreover, in another example, a plurality of predefined data sequences is defined and the fast access message consists of at least two of these predefined data sequences. In this example, the mobile station may transmit one of said at least two predefined data sequences in each time slot of said given number of time slots carrying the fast access message.

Another embodiment of the invention relates to a base station for configuring a transmission power mask indicating different transmission power levels within a time slot that are to be applied to the transmission of a fast access message by a mobile station. The base station comprises a transmitter for transmitting an indication of a duration of the time period within the time slot in which the transmission power for transmitting the fast access message is non-zero.

According to another embodiment, the base station further comprises comprising a processor for estimating multi-path delay experienced by uplink transmissions on the traffic channel. The processor is further used to determine a duration of the time period within the time slot in which the transmission power for transmitting the fast access message is non-zero based on the estimation of the multi-path fading on the traffic channel.

Moreover, another embodiment of the invention relates to a mobile communication system utilizing the transmission power mask according to one of the different embodiments described herein. Similarly, a further embodiment of the invention relates to a mobile communication system comprising a mobile station and/or a base station according to on of the different embodiments described herein.

The invention according to a further embodiment relates to a computer readable medium storing instructions that, when executed by a processor of the mobile terminal cause the mobile terminal to reduce interference caused by a fast access message within a mobile communication system utilizing TDMA for dividing physical resources at a given transmission frequency into individual time slots. This is by the instructions causing the first mobile station to recognize the fact that the base station temporarily allocated said time slots on the downlink for use by the second mobile station, and to transmit a fast access message within said time slot temporarily allocated for use by the second mobile station, wherein the fast access message is for requesting reallocation of the time slot on the uplink by the first mobile station. Thereby, the instruction further cause the first mobile station to apply a transmission power mask to the transmission of the fast access message thereby utilizing zero transmission power for the transmission of those portion or portions of the fast access message potentially coinciding with a transmission of encrypted bits of user data by the second mobile station within the time slot.

The computer readable medium according to another embodiment, further stores instructions that, when executed by the processor of the mobile station, cause the mobile terminal to receive from a base station an indication an indication of a duration of the time period within the time slot in which the transmission power for transmitting the fast access message is non-zero.

The computer readable medium according to further embodiment of the invention, additionally stores instructions that, when executed by the processor of the mobile station, cause the mobile terminal to estimate multi-path fading experienced by downlink transmissions on the traffic channel and to determine a duration of the time period within the time slot in which the transmission power for transmitting the fast access message is non-zero based on the estimation of the multi-path fading on the traffic channel.

In another embodiment, the computer readable medium further stores instructions that, when executed by the processor of the mobile station, cause the mobile terminal to apply the transmission power mask to each time slot carrying a radio block comprising the fast access message. Moreover, the computer readable medium may store instructions that, when executed by the processor of the mobile station, cause the mobile terminal to transmit one of predefined data sequences in each time slot of said given number of time slots carrying the fast access message.

Another embodiment of the invention is related to a computer readable for storing instructions that, when executed by a processor of a base station, caused the base station to configure a transmission power mask indicating different transmission power levels within a time slot that are to be applied to the transmission of a fast access message by a mobile station, by transmitting an indication of a duration of the time period within the time slot in which the transmission power for transmitting the fast access message is non-zero.

In another embodiment of the invention, this computer readable medium, further stores instructions that, when executed by the processor of the base station, cause the base station to estimate multi-path fading experienced by downlink transmissions on the traffic channel and to determine a duration of the time period within the time slot in which the transmission power for transmitting the fast access message is non-zero based on the estimation of the multi-path fading on the traffic channel.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows an exemplary TDMA frame of a GSM system,
- **Fig. 2**: shows an exemplary TDMA frame of a GSM system implementing GPRS,
- **Fig. 3**: shows an exemplary radio block structure in a GSM based communication system,
- **Fig. 4**: shows an exemplary normal burst of a GSM system and a simplified transmission power mask to be used for the transmission of the normal burst according to the GSM standards,

- **Fig. 5 & 6**: show two exemplary transmit power masks according to different exemplary embodiments to be used for a fast access message transmitted in parallel to a normal burst and a high symbol rate burst of a GSM system, respectively, and
- **Fig. 7**: exemplifies the parallel transmission of a normal burst and a fast access message by two mobile stations according to an embodiment of the invention.

### DETAILED DESCRIPTION OF THE INVENTION

The following paragraphs will describe various embodiments of the invention. For exemplary purposes only, most of the embodiments are outlined in relation to an (evolved) GSM communication system discussed in the Technical Background section above. It should be noted that the invention may be advantageously used in other mobile communication systems utilizing a TDMA approach to allocate a radio resource e.g. in time slots to mobile stations and where a simultaneous transmission of plural mobile stations should be avoided due to interference; furthermore it may be presumed that those time slots contain a fixed data part such as a training sequence and a variable part such as encrypted data bits.

The invention described herein may be used in a GSM-based communication system, and in particular the invention may be implemented in GPRS and EGPRS based communication systems as for example known from 3GPP TS 43.064, "GSM/EDGE Radio Access Network;General Packet Radio Service (GPRS); Overall description of the GPRS radio interface;Stage 2 (Release 7)", version 7.6.0, available at http://www.3gpp.org and incorporated herein by reference.

As outlined in the Technical Background (E)GPRS allows the multiplexing of several mobiles on a single 'physical channel' resource (i.e. specific timeslot with particular frequency hopping sequence). The base station (BTS) controls the multiplexing both in the uplink and downlink direction, and makes the decision about which mobile will use the resource during each radio block.

It is highly desirable to allow a mobile sending speech over a GPRS packet channel (such as a VoIP user) to multiplex with other 'best effort' mobiles on the same physical channel. When there is no voice activity, the other mobiles could send data on that channel, leading to highly efficient use of valuable spectrum. But there is a well known problem: when the user starts talking after a silent period, any delay to resumption of uplink speech may lead to 'clipping' (see for example 3GPP GP-070676, "Faster Detection of Resumed Uplink Speech", 3GPP TSG-GERAN, Meeting #34, Shenzhen, China, May 14-18, 2007, available at http://www.3gpp.org). This makes multiplexing on the uplink difficult.

Multiplexing on the downlink is straightforward, since the base station is the transmitter on the downlink and is also responsible for the multiplexing decision. Therefore, the base station selects which mobile it will transmit data to and marks this data with an address which uniquely indicates the target mobile. During a gap in downlink speech, data can be sent to other mobiles. When voice activity resumes, there need be no delay in sending downlink frames to the speech user.

Multiplexing on the uplink has problem: the base station not know when the period of speech silence ends. In the current GPRS system it must regularly 'poll' the speech mobile during speech gaps in case speech frames are now ready to send. This means that it allocates the speech mobile uplink resources whether it needs them or not, in order that the mobile can transmit a frame to indicate that speech has resumed. This is clearly wasteful, and also subject to undesirable delays: either the base station polls the speech mobile frequently, which wastes uplink resources with 'no data' responses, or it polls it infrequently, in which case speech resumption is delayed.

The invention described herein utilizes the ideas described in EP 1 435 746 A1, and, according to one embodiment of the invention, makes use of the "common predetermined access message" and "fast access request" (both summarized in the term "fast access message" herein). In particular the invention suggests a specific transmission power mask for utilization in the transmission of the fast access message.

Further to the system disclosed in EP 1 435 746 A1, the different aspects of the invention include the proposal of a new transmit burst structure to contain this fast access message to ensure that interference with uplink data is minimized and the proposal of a method of mitigating any co-channel interference caused by the fast access message, which relies using a fixed set of "fast access training sequences" which vary in a deterministic way from burst to burst.

As indicated previously, one main aspect of the invention is the definition of a new transmission power mask. In contrast to the conventional transmission power control masks that are for example defined for GSM based systems (see for example 3GPP TS 45.005, "Technical Specification Group GSM/EDGE; Radio Access Network; Multiplexing and multiple access on the radio path (Release 7)", version 7.11.0, Annex B, available at http://www.3gpp.org and incorporated herein by reference) the transmission power mask specified herein is not foreseeing a non-zero transmission power level over the time span of the duration of a burst transmitted during a time slot. For TDMA based systems like GSM/GPRS/EGPRS, the transmission power mask proposed herein defines at least two different transmission power levels that are to be applied to the uplink transmission during a time slot. The transmission power mask proposed herein is designed to avoid interference with parallel transmissions of other mobile terminals in the same time slot. According to one embodiment of the invention, the transmission power mask indicates a zero transmission power level for the portion or portions of the time slot in which another mobile station may transmit encrypted bits of user data, and indicates a non-zero transmission power level for the portion or portions of the time slot in which another mobile station does not transmit encrypted bits of user data.

Generally, it should be noted that it is difficult to suppress transmitted power in a transmitting circuitry completely. In practice and in accordance with this invention, while the transmitter is in the 'power off' condition (i.e. utilizes zero transmission power) the transmitted power is required to be below a certain prescribed threshold level rather than strictly zero. For example, in one embodiment of the invention, zero transmission power means or 'power off' condition of the transmitter means that residual output power is maintained at, or below, the level of -54 dBm. Likewise, non-zero transmission power or 'power on' condition of the transmitter means that the residual output power of the transmitter is higher than this threshold value, and for example corresponds to a transmission power level commanded by the base station. Similarly, it is also understood by a skilled person that the transmission power mask may not be implemented as to switch between power levels in a single time instance (as may be also recognized in 3GPP TS 45.005, Annex B) - instead the illustrations of the proposed transmission power masks are actually a simplified representation of the transmission power mask.

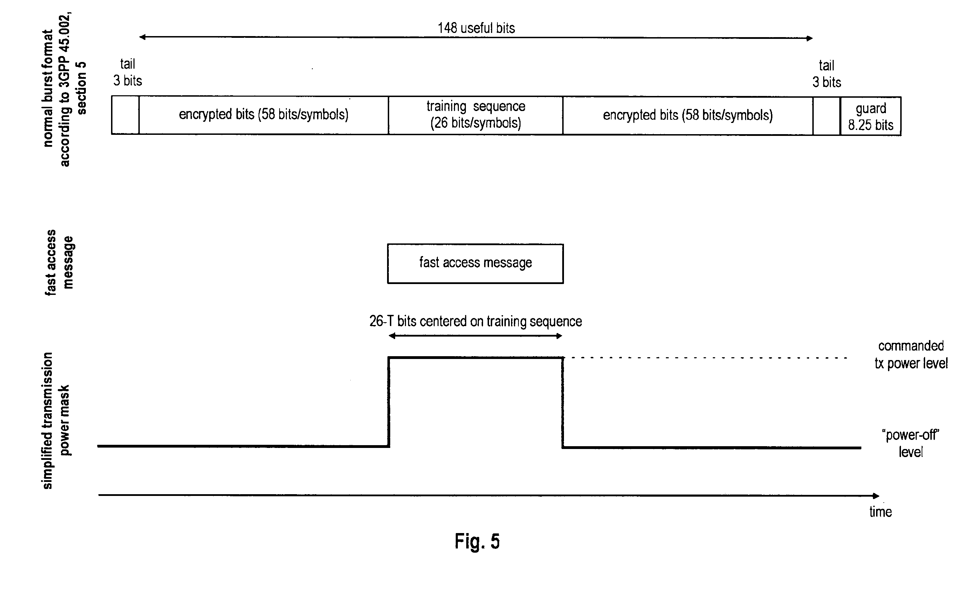

In one embodiment of the invention, the burst format of the burst transmitted during a time slot comprise a training sequence (e.g. at the centre of the burst) and another portion or portions comprising encrypted bits of user data. In this exemplary embodiment, the transmission power mask to be applied to the transmission of the fast access message is indicating a non-zero power level only for the duration of the time slot that is coinciding with a potential simultaneous transmission of the training sequence, and indicates a zero transmission power for the portion(s) of the time slot in which another mobile station potentially transmits its user data in form of encrypted bits. As illustrated in Fig. 5 to 7, the fast access message itself may have a time duration equivalent to the length of the training sequence and its position in the time slot may be centred on the training sequence of the potential parallel transmission of the training sequence in a time slot (which typically corresponds to the middle of the time slot for burst in GSM systems).

However, it is also possible that the fast access message has a longer duration than the training sequence, e.g. equivalent to the time slot (including tail bits and guard bits), so that the proposed transmission power mask "mutes" the bits of the fast access message not coinciding with the training sequence of a potential transmission burst of another mobile station in the same time slot.

As the transmission power mask proposed herein minimizes interference with the user data portions of a transmission burst transmitted in parallel on the same time slot as the fast access message, in one embodiment of the invention, the fast access message is designed so as to have minimum correlation with parallel transmissions. If the length of the fast access message is similar to the length of the training sequence, the fast access message should be designed to have minimum correlation with the training sequence potentially contained in a parallel transmission burst. The fast access message may be thus considered a known signal having minimum correlation with the known training sequence which all mobiles in the same cell use on the uplink. Accordingly, in case the fast access message is longer (in terms of bits) than the training sequence potentially contained in a parallel transmission burst, those bits of the fast access message for which the transmission power mask indicates a zero transmission power will not contribute to interference with a parallel transmission burst. Accordingly, the design of these bits may be arbitrarily chosen, e.g. all zeros or a random bit sequence.

Furthermore, the fast access message is identifying the mobile station sending the message. For this purpose, there may be distinct fast access messages defined for different mobile stations, so that the respective fast access message format is indicating the requesting mobile station to the base station.

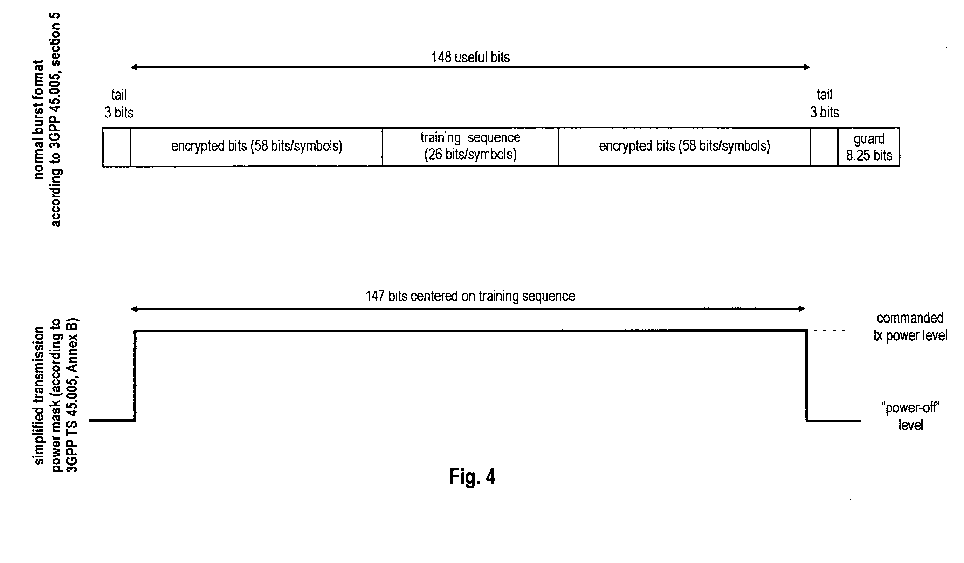

Fig. 4 shows the transmit power time mask for the normal burst as defined in 3GPP TS 45.005, Annex B, alongside the structure of the normal burst (see 3GPP TS 45.002, "Technical Specification Group GSM/EDGE; Radio Access Network; Multiplexing and multiple access on the radio path (Release 7)", version 7.5.0, section 5 (available at http://www.3gpp.org and incorporated herein by reference)). Outside the central 147 bits of the burst, the transmitter is in the 'power off' condition. During the central 147 bits, the mobile should transmit at the requested power. Note that this figure is simplified and does not show allowed level and time tolerances, for which it is referred to the full description in 3GPP TS 45.005.

Fig. 5 illustrates an exemplary new transmit power time mask for a fast access message according to one embodiment of the invention. Similar to Fig. 4, it is assumed that another mobile station than that sending the fast access message is transmitting in parallel a normal burst. The "useful part" of the normal burst consists of two portions of encrypted user data ("encrypted bits") and a training centre consisting of a known bit sequence in the centre of the burst. The normal burst and the fast access message are supposed to be transmitted (in parallel) in a single time slot on a traffic channel (in the uplink). An exemplary fast access message is illustrated below the normal burst format. With respect to the fast access message, it should be noted that it may be defined as for example in the EP 1 435 746 A1, i.e. the fast access message may for example also comprise of 148 bits. As the transmit power mask will blank parts of the fast access message bits, the fast access message should at least comprise the same number of bits as the training sequence in the parallel transmission burst.

As illustrated in Fig. 5, the transmission power mask is only "non-zero" during the time duration equal to 26-T bits, where T may be considered training sequence reduction factor, being a natural number equal or larger than 0. Note that time axis used in the figure is from the perspective of the base station, i.e. after any time of flight from the mobile station to the base station (which may differ from the transmission timing of the mobile stations). The reduction factor may take into account the multipath fading delay of the uplink signals so as to assure that the fast access message will not interfere with the user data portions of the parallel transmission burst of another mobile station in situations where there is fading present on the transmission channel. This ensures that even in the presence of multipath spreading, the "fast access message" only interferes with the training sequence and does not interfere with adjacent data bits. As a yet further improvement, the mobile station may for example adjust the transmitted power when T is non-zero to maintain the same total transmit energy as for the case where T is zero, thus ensuring that detectability is not impaired.

In one exemplary embodiment of the invention, the value T would be calculated by the base station, which is best placed to estimate the amount of multipath spreading, and signalled to the mobile station. However it is also possible that the mobile station could observe the multipath spreading on the downlink and adjust T on the assumption that the amount of multipath spreading observed by the base station on the uplink is likely to be similar.

Due to the proposed design of the transmission power mask in Fig. 5, the transmitter circuitry of the mobile station sending the fast access message uses the commanded power level only during a portion of the time slot that is coinciding with the training sequence, so that outside the time occupied by the training sequence the transmitter circuitry is turned off. As a result, assuming a normal burst to be transmitted in parallel in the same time slot, the fast access message only interferes with the training sequence of any uplink transmission from another mobile on the same timeslot. Since this training sequence is known, the fast access message can consist of a fixed sequence which is optimized to interfere minimally with the training sequence as proposed in EP 1 435 746 A1.

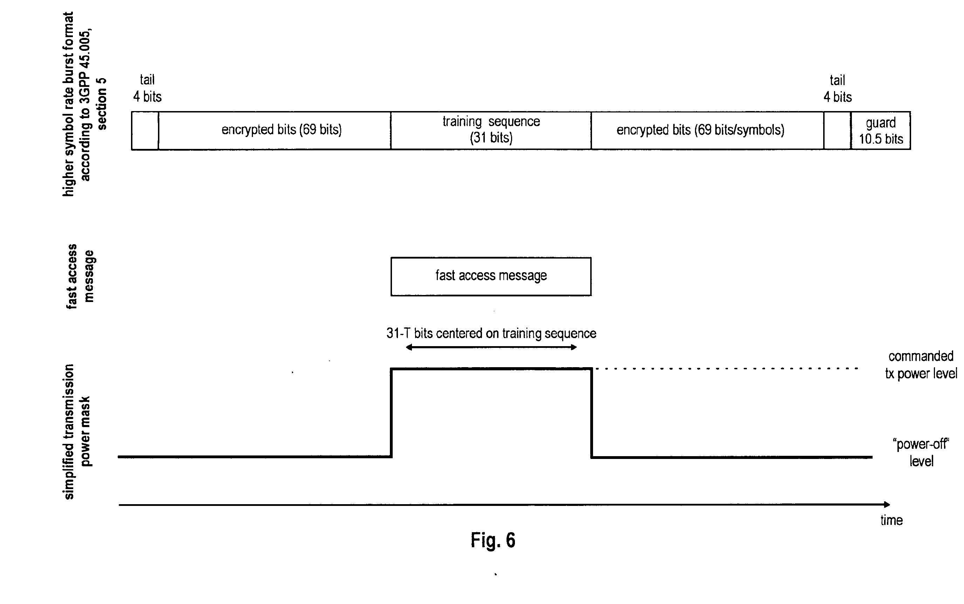

Fig. 6 illustrates another exemplary new transmit power time mask for a fast access message according to one embodiment of the invention, which is essentially similar to the example shown in Fig. 5. Instead of supposing a parallel transmission of a normal burst, the example shown in Fig. 6 considers the case of a parallel transmission of higher symbol rate burst as also specified in 3GPP 45.002, section 5. Unlike a normal burst, the higher symbol rate burst is transmitted by the mobile stations using a higher order modulation scheme than the GMSK modulation used for the normal burst, so that more user data may be transmitted in a single burst. In addition, the training sequence of the higher data rate burst covers 31 bits in time. Accordingly, the non-zero transmission power level duration of the transmission power mask according to this exemplary embodiment may be enlarged to 31-T bits, where T is the before mentioned reduction factor.

Another embodiment of the invention relates to the utilization of the radio block concept as has been initially explained referring to Fig. 3 for the transmission of a fast access message. Accordingly, a fast access message may not only span a single time slot but may be transmitted in a given number of consecutive time slots in subsequent frames. For example, similar to Fig. 3, the fast access message may be transmitted on the uplink during the four bursts of a radio block. According to this example, the transmit power time mask proposed herein may be applied to each of these four bursts carrying the fast access message.

Another aspect of the invention is to mitigate co-channel interference with adjacent base stations. Although it is possible to identify fixed data sequences for the fast access message which interfere minimally with the training sequence used at the base station, there is still the problem that the fast access message may produce unwanted interference at adjacent base stations. Furthermore, it is not possible to design a fixed data sequence which has uniformly low correlation with the training sequences at adjacent base stations, since the time of flight to the adjacent base station is unknown. Therefore there is a danger that if a fixed data sequence is used as a fast access message, it will generate undesired interference at an adjacent base station. However as explained in EP 1 435 746 A1, there exists a set of fixed data sequences which have the desired interference properties at the wanted base station.

Another embodiment of the invention proposes that a set of such fixed data sequences is used in a cyclic manner. When the fast access message is transmitted during the time slots of a radio block (e.g. 4 consecutive bursts of a radio block), each burst of the fast access message could for example use a different element of this repertoire of fixed data sequences. Even if different sequences are transmitted as (part of) a fast access message, no signal which members to use may be needed: since the repertoire is fixed for each training sequence, all that is required is a convention for indexing and ordering the different members of the set of data sequences, and they can then be used in a known pre-determined sequence of which both transmitter (mobile station) and receiver (base station) are aware. Accordingly, even if utilizing different sequences to represent the fast access message, no additional signalling overhead may be implied.

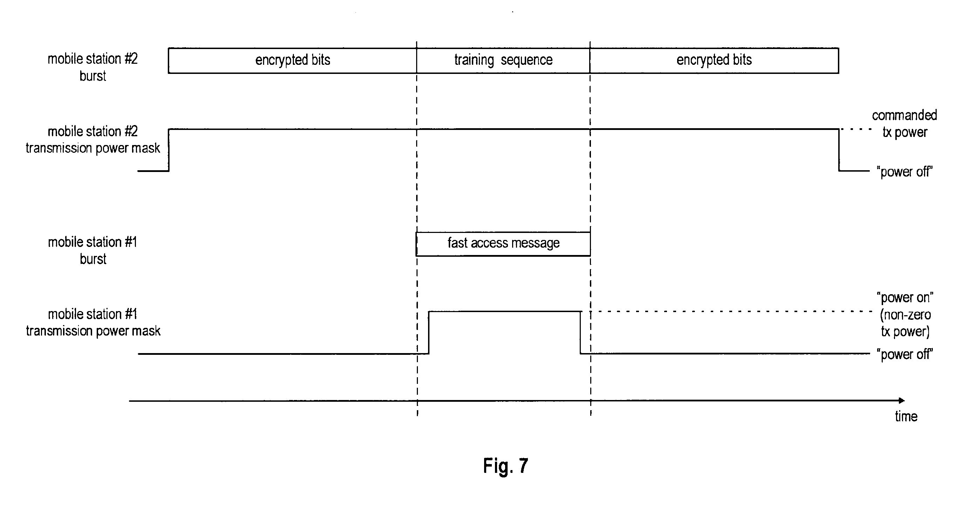

Fig. 7 illustrates the parallel transmission of a fast access message by a first mobile station (mobile station #1) and a burst by a second mobile station (mobile station #2) according to an exemplary embodiment of the invention. Note that time axis used in the figure is from the perspective of the base station, i.e. after any time of flight from the mobile station to the base station (which may differ between mobile stations). For exemplary purposes it may be assumed that both mobile stations have been assigned to a common time slot on of an uplink traffic channel to transmit to a base station. Further, it may be assumed that the base station has allocated the time slot to the second base station, e.g. by an appropriate setting of the USF flag in a downlink transmission. The communication system may provide discontinuous transmission (DTX) to optimally utilize resources in the communication system. Accordingly, the time slot assigned to both mobile stations is allocated for use to the second mobile station during a speech pause of the user of the first mobile station.

The first mobile station may desire to be (re)allocated the assigned time slot, e.g. as the user has continued to speak. Though the time slot on the traffic channel is still allocated the second mobile station, the first mobile station may send a fast access message in the assigned time slot in the next frame. Similarly, the second mobile station may have user data pending for transmission, so that it is going to transmit a normal burst in the assigned and allocated time slot to the base station. Accordingly, the second mobile station transmits its burst in the allocated time slot applying the transmission power mask to the normal burst as has been exemplified with respect to Fig. 4. The second mobile station also generates a burst comprising (a part of) the fast access message, e.g. utilizing one of the sequences proposed in EP 1 435 746 A1. Further the first mobile station applies the proposed transmit power mask to its transmission burst, so that the transmitting circuitry only outputs transmission power during those portion(s) of the time slot that is coinciding (in time) with the transmission of the training sequence of the normal burst transmitted by the second mobile station. In the example of Fig. 7, the first mobile station applies the transmission transmit power reduction factor so that the transmission power mask utilizes a non-zero transmission power for a time duration shorter than the duration of the transmission of the training sequence in the normal burst within the time slot.

The reduction faction may be for example configured by the first mobile station in response to receiving a corresponding control signalling from the base station that is indicating the multipath fading delay. Alternatively, the first mobile station may also estimate the multipath fading delay and may adapt the reduction factor to be used for the transmission power mask of the fast access message accordingly.

The base station may signal the training sequence reduction factor to the first mobile station. In one embodiment of the invention, this is done using a new or and an extension to existing signalling messages on the PACCH channel, as for example described in 3GPP TS 44.060 "General Packet Radio Service (GPRS); Mobile Station (MS) - Base Station System (BSS) interface; Radio Link Control/Medium Access Control (RLC/MAC) protocol (Release 7)", version 7.10.0, chapter 11, available at http://www.3gpp.org, incorporated herein by reference. This reduction factor may be signalled as a newly defined optional field within the control message used to control timing advance, e.g. the "Packet Power Control/Timing Advance" message, which is sent periodically by the base station to each individual mobile to control its transmit power and the timing advance. For example, a bit field consisting of 3 bits would allow the base station to signal a reduction of 0 to 7 bit periods in the length of the transmission power mask. If this bit field is not present in this signalling message, then the most recently signalled value is used. If no value has been yet supplied the value "0" is used.

In another embodiment, the training sequence reduction factor is signalled to the first mobile station using a field within the "Packet Power Control/Timing Advance" message
where the field has the following format: *{ 0* | *1* < *training sequence reduction factor : bit* (3) *> }*
where the notation indicates that either the field is not present, in which case the decoder encounters a zero bit at the position where it is potentially present, or it is present in which case the decoder encounters a 1 bit followed by a three bit value for the training sequence reduction factor.

The fast access message may be regarded as a pre-emptive signal to re-request the allocation of a PDCH (Physical Data Channel) to the requesting mobile station. As such it has certain functional and structural similarities with an "Access Burst" (AB), which can be regarded as a pre-emptive signal to request communications with a base station. However, it should be noted that the design of the access burst and its transmit power mask is made in view of the need to ensure that the whole of the access burst is within the correct timeslot when it arrives at the base station, provided that the time of flight between the mobile station and the base station is less than the duration of 60 bits periods (this corresponds to a maximum range of approximately 60 kilometres). It does this by ensure that the length of the access burst is 60 bits less than the length of a normal burst, so provided the time of flight does not exceed this amount it can be received by the base station within one slot. If the mobile station is too far away, then the mobile station cannot be prevented from transmitting the access burst but it is unlikely to be decoded correctly since part of it will be interfered with by mobiles transmitting in adjacent slots. In the case of transmissions of a fast access message there is no uncertainty about time of flight, and the objective of shortening the transmit power time mask is to prevent the mobile transmitting fast access message interfering with other mobiles using the same timeslot, rather than to protect the fast access burst itself from interference from other transmissions.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive

## Claims

1. A method for reducing interference caused by a fast access message within a mobile communication system utilizing TDMA for dividing physical resources at a given transmission frequency into individual time slots, wherein a given number of time slots forms a frame, and wherein one or more time slots of a frame is/are assigned for potential use to both a first and second mobile station to transmit via a traffic channel, the method comprising:
temporarily allocating said time slots on the uplink for use by the second mobile station, and
transmitting by the first mobile station a fast access message within said time slot temporarily allocated for use by the second mobile station, wherein the fast access message is for requesting reallocation of the time slot on the uplink link to the first mobile station, and
wherein the first mobile station applies a transmission power mask to the transmission of the fast access message thereby utilizing zero transmission power for the transmission of those portion or portions of the fast access message potentially coinciding with a transmission of encrypted bits of user data by the second mobile station within the time slot.

2. The method according to claim 1, further comprising the step of transmitting by the second mobile station a burst of data within the time slot temporarily allocated to the second mobile station, wherein said burst of data comprises a training sequence and the encrypted bits of user data.

3. The method according to claim 1 or 2, wherein the first mobile station utilizes a non-zero transmission power for at least a portion of the transmission of the fast access message that is coinciding with the transmission of the training sequence within the burst of data by the second mobile station in said time slot.

4. The method according to one of claims 1 to 3, wherein the transmission power mask is indicating a non-zero transmission power for a portion of the duration of the time slot that is not coinciding with at least a part of the training sequence within the burst of data transmitted by the second mobile station, and is indicating zero transmission power for the remaining portion of the time slot.

5. The method according to one of claim 1 to 4, further comprising the step of re-allocating the time slot temporarily allocated to the second mobile station to the first mobile station by a base station, in response to receiving the fast access message at the base station

6. The method according to one of claims 1 to 5, wherein the burst of data transmitted by the second mobile terminal within the time slot is a normal burst or a high symbol rate burst of a GSM system.

7. The method according to claim 6, wherein the normal burst or high symbol rate burst comprise tail bits, encrypted bits for user data, the training sequence and a guard period.

8. The method according to claim 7, wherein the transmission power mask is indicating a zero transmission power for the portion or portions of the time slot in which another mobile station may transmit encrypted bits for user data.

9. The method according to one of claims 1 to 8, wherein the fast access message is comprised in a radio block being transmitted utilizing a given number of time slots in successive frames, and wherein the first mobile terminal applies the transmission power mask to each time slot carrying the radio block comprising the fast access message.

10. The method according to claim 9, wherein a plurality of predefined data sequences is defined and the fast access message consists of different ones of the predefined data sequences, and wherein in each time slot of said given number of time slots, the first mobile station transmits one of said predefined data sequences forming the fast access message.

11. The method according to claim 10, wherein the predefined data sequences have a minimal correlation with a normal burst or a high data rate burst of a GSM based communication system.

12. The method according to one of claims 1 to 11, further comprising the step of receiving at the first mobile station and/or the second mobile station from a base station an indication of the duration of the time period within the time slot in which the transmission power for transmitting the fast access message is non-zero.

13. A transmission power mask for use in a GSM based communication system,
wherein the transmission power mask is indicating different transmission power levels within a time slot that are to be applied to the transmission of a fast access message by a mobile station,
wherein the transmission power mask is indicating a zero transmission power for the portion or portions of the time slot in which another mobile station may transmit encrypted bits for user data.

14. The transmission power mask according to claim 13, wherein the transmission power mask is indicating a non-zero transmission power for a portion of the duration of the time slot that is coinciding with at least a part of a training sequence of a burst of data transmitted by another mobile station within the same time slot, and is indicating zero transmission power for the remaining portion of the time slot.

15. The transmission power mask according to claim 13 or 14, wherein the transmission power mask indicates a non-zero transmission power within the time slot for a time duration equal or smaller than the time duration of 26 bits or modulation symbols of a normal burst of a GSM based mobile communication system.

16. The transmission power mask according to claim 13 or 14, wherein the transmission power mask indicates a non-zero transmission power within the time slot for a time duration equal or smaller than the 31 symbols of the training sequence of a high symbol rate burst of a GSM based mobile communication system.

17. A mobile station for use within a mobile communication system utilizing TDMA for dividing physical resources at a given transmission frequency into individual time slots, wherein a given number of time slots is forming a frame, and wherein the mobile station is assigned a time slot of a frame to transmit via a traffic channel on the uplink, and wherein said assigned time slot assigned to the mobile station is temporarily allocated to another mobile station, the mobile station comprising a transmitter for transmitting a fast access message in the time slot temporarily allocated to another mobile station, wherein the fast access message is for requesting reallocation of the time slot to the mobile station,
wherein the mobile station is adapted to apply a transmission power mask to the transmission of the fast access message thereby utilizing zero transmission power for the transmission of those portion or portions of the fast access message potentially coinciding with a transmission of encrypted bits of user data by the second mobile station within the time slot.

18. The mobile station according to claim 17, further comprising a receiver for receiving from a base station an indication of a duration of the time period within the time slot in which the transmission power for transmitting the fast access message is non-zero.

19. The mobile station according to claims 17 or 18, further comprising a processor for estimating multi-path fading experienced by downlink transmissions on the traffic channel and for determining a duration of the time period within the time slot in which the transmission power for transmitting the fast access message is non-zero based on the estimation of the multi-path fading on the traffic channel.

20. The mobile station according to one of claims 17 to 19, wherein fast access message is comprised in a radio block being transmitted utilizing a given number of time slots in successive frames, and wherein the mobile terminal is adapted to apply the transmission power mask to each time slot carrying the radio block comprising the fast access message.

21. The mobile station according to claim 20, wherein a plurality of predefined data sequences is defined and the fast access message consists of at least two of these predefined data sequences, and wherein the mobile station is adapted to transmit one of said at least two predefined data sequences in each time slot of said given number of time slots carrying the fast access message.

22. A base station for configuring a transmission power mask indicating different transmission power levels within a time slot that are to be applied to the transmission of a fast access message by a mobile station, the base station comprising a transmitter for transmitting an indication of a duration of the time period within the time slot in which the transmission power for transmitting the fast access message is non-zero.

23. The base station according to claim 22, further comprising a processor for estimating multi-path delay experienced by uplink transmissions on the traffic channel and for determining a duration of the time period within the time slot in which the transmission power for transmitting the fast access message is non-zero based on the estimation of the multi-path fading on the traffic channel.

24. A mobile communication system utilizing the transmission power mask according to one of claims 13 to 16.

25. A mobile communication system comprising a mobile station according to one of claims 17 to 21 and/or a base station according to claim 22 or 23.

26. A computer readable medium storing instructions that, when executed by a processor of the mobile terminal cause the mobile terminal to reduce interference caused by a fast access message within a mobile communication system utilizing TDMA for dividing physical resources at a given transmission frequency into individual time slots, wherein a given number of time slots forms a frame, and wherein one or more time slots of a frame is/are assigned for potential use to both a first and second mobile station to transmit via a traffic channel, by:
temporarily allocating said time slots on the downlink for use by the second mobile station, and
transmitting by the first mobile station a fast access message within said time slot temporarily allocated for use by the second mobile station, wherein the fast access message is for requesting reallocation of the time slot on the uplink by the first mobile station, and
wherein the first mobile station applies a transmission power mask to the transmission of the fast access message thereby utilizing zero transmission power for the transmission of those portion or portions of the fast access message potentially coinciding with a transmission of encrypted bits of user data by the second mobile station within the time slot.

27. The computer readable medium according to claim 26, further storing instructions that, when executed by the processor of the mobile station, cause the mobile terminal to receive from a base station an indication an indication of a duration of the time period within the time slot in which the transmission power for transmitting the fast access message is non-zero.

28. The computer readable medium according to claim 26 or 27, further storing instructions that, when executed by the processor of the mobile station, cause the mobile terminal to estimate multi-path fading experienced by downlink transmissions on the traffic channel and to determine a duration of the time period within the time slot in which the transmission power for transmitting the fast access message is non-zero based on the estimation of the multi-path fading on the traffic channel.

29. The computer readable medium according to one of claims 26 to 28, further storing instructions that, when executed by the processor of the mobile station, cause the mobile terminal to apply the transmission power mask to each time slot carrying a radio block comprising the fast access message.

30. The computer readable medium according to claim 29, further storing instructions that, when executed by the processor of the mobile station, cause the mobile terminal to transmit one of predefined data sequences in each time slot of said given number of time slots carrying the fast access message.

31. A computer readable for storing instructions that, when executed by a processor of a base station, caused the base station to configure a transmission power mask indicating different transmission power levels within a time slot that are to be applied to the transmission of a fast access message by a mobile station, by transmitting an indication of a duration of the time period within the time slot in which the transmission power for transmitting the fast access message is non-zero.

32. The computer readable medium according to claim 31, further storing instructions that, when executed by the processor of the base station, cause the base station to estimate multi-path fading experienced by downlink transmissions on the traffic channel and to determine a duration of the time period within the time slot in which the transmission power for transmitting the fast access message is non-zero based on the estimation of the multi-path fading on the traffic channel.
